# EUROPEAN PATENT SPECIFICATION

(11) **EP 3 107 428 B1**
(45) Date of publication and mention of the grant of the patent: **16.10.2019**
(21) Application number: 14708079.0
(22) Date of filing: 21.02.2014
(51) Int. Cl.: A47J 27/00, H05B 6/12

(54) **MAGNETIC METHOD FOR DETERMINING A COOKING APPLIANCE CHARACTERISTIC**
MAGNETISCHES VERFAHREN ZUR BESTIMMUNG EINER EIGENSCHAFT EINER GARVORRICHTUNG
PROCÉDÉ MAGNÉTIQUE POUR LA DÉTERMINATION D'UNE CARACTÉRISTIQUE D'APPAREIL DE CUISSON

(43) Date of publication of application: 28.12.2016
(73) Proprietor: Morphy Richards Limited, Rotherham South Yorkshire S63 5AB (GB)
(72) Inventor: RICHARDSON, Jack, Rotherham South Yorkshire S63 5AB (GB); MEDDICK, James, Rotherham South Yorkshire S63 5AB (GB); JAMES, Michael, Rotherham South Yorkshire S63 5AB (GB); HAUSER, Glyn, Rotherham South Yorkshire S63 5AB (GB); JONES, David, Rotherham, South Yorkshire S63 5AB (GB)
(74) Representative: Franks & Co Limited
(86) International application number: PCT/GB2014/000060
(87) International publication number: WO 2015/124883

(56) References cited:
- WO-A1-83/00548
- DE-A1- 10 150 949
- FR-A1- 2 290 125
- GB-A- 2 506 907
- US-A1- 2010 147 832

## Description

### Field of the Invention

The present invention relates to cooking appliances, cooking hobs and a method for determining a characteristic such as a cooking profile for a cooking appliance seated on a cooking hob. The invention is particularly useful for identifying a cooking profile or cooking characteristic to eliminate or at least reduce the requirements for a user to select cooking temperatures (or hob settings) for a specific cooking appliance.

### Background of the Invention

There are numerous cooking appliances that can be used on cooking hobs such as induction hobs. These appliances offer a wide range of cooking modes such as boiling, griddling, poaching, steaming, simmering, blanching, Sous Vide style cooking and frying. After placing a cooking appliance on a cooking hob the user then typically selects a cooking mode by interacting with control settings of the hob. This interaction may be inconvenient especially when the user has wet hands, or food residue on their hands, resulting from preparing food that is to be cooked on the hob. It would therefore be useful if the cooking hob identifies a cooking characteristic or cooking profile of the cooking appliance that can be used to set control cooking settings of the cooking hob.

Some cooking appliances are known to have radio transmitters for wireless communication with cooking hobs. This wireless communication can be used to provide characteristics of the cooking appliance to the cooking hob. However, the radio transmitter should either be in a watertight chamber or removable from the appliance so that moisture does not come into contact with the circuitry of the transmitter during washing of the appliance. Furthermore, these appliances are relatively expensive due to the additional circuitry of the transmitter and also require a battery or other power storage means. Such transmitters also need to be kept away from the high temperatures and thus are typically stored in a handle of the appliance which can be at a distance of as much as 10 to 15 cm from the cooking hob. It would therefore be beneficial if the characteristics of the appliance could be communicated to the induction hob without the need for radio transmitters.

US 2010/0147832 A1 discloses a cooking appliance for use on a cooking hob, which has a plurality of magnets which identifies the presence or absence of the cooking appliance to the cooking hob. However US 2010/0147832A1 does not go as far as providing a code which uniquely identifies an item of cookware. Documents FR 2 290 125 A1 and DE 101 50 949 A1 disclose other cooking appliances according to the prior art.

### Summary of the Invention

According to a first aspect of the present invention, there is provided a cooking appliance (100) for use on a cooking hob, the appliance comprising:
a cooking vessel (102) containing a chamber (104) therein; and
a plurality of magnets (106), each said magnet having a north pole and a south pole,
characterised in that
the magnetic code is determined by the orientation of the poles of said plurality of magnets (106), wherein said magnetic code identifies at least one characteristic of the cooking appliance.

Preferably said cooking appliance further includes an appliance positioning interlock (110) for operatively coupling with an appliance positioning interlock engagement member (406) of a cooking hob to thereby position the cooking appliance on the cooking hob in a predefined location.

Suitably, there is a ferrous based inductive heating member associated with the vessel.

Preferably, the vessel includes a base for seating the cooking appliance on a cooking hob, wherein the magnets are located in the base.

The ferrous based inductive heating member suitably forms at least part of the base.

Suitably, there is at least one ridge protruding from the vessel.

The ridge is preferably formed from a non-ferrous based material.

Preferably, the ridge is a flange.

At least one of the magnets may be located in the ridge.

Suitably, the base has a seating plane that is co-planar with a lower surface of the ridge.

The appliance positioning interlock can be integral with the ridge.

Suitably, the appliance positioning interlock is a recess in the cooking appliance.

Preferably there is provided a set of cooking appliances, each of the appliances comprising an appliance according to the first aspect of the present invention, wherein each magnetic code uniquely identifies its associated appliance from the other appliances in the set.

According to a second aspect of the present invention, there is provided a cooking hob comprising:
at least one inductive coil;
a driver having an output coupled to the inductive coil;
a magnetic decoder coupled to the controller, the magnetic decoder comprising a plurality of magnetic field sensors,
wherein in operation, when a magnetic code comprising a plurality of magnets each said magnet having a north pole at the South Pole, the magnetic code determined by the orientation of poles of said plurality of magnets, is placed over the magnetic decoder, the magnetic decoder provides said code to the controller, said code being indicative of at least one characteristic of a cooking appliance associated with said code.

Suitably, the characteristic of the cooking appliance relates to the type of cooking appliance.

Preferably, the characteristic of a cooking appliance relates to a cooking profile of the appliance.

The magnetic field sensors may suitably be hall effect sensors.

Preferably, the magnet decoder provides the code which is dependent upon magnetic field polarities detected from magnets mounted to the cooking appliance.

Suitably, said cooking hob comprises an appliance positioning interlock engagement member.

Suitably, there is at least one appliance engagement sensor associated with the appliance positioning interlock engagement member.

Preferably, the appliance positioning interlock engagement member is a protrusion on the cooking appliance support surface.

According to a third aspect of the present invention, there is provided a method of determining a characteristic of a cooking appliance seated on a cooking hob, the method being performed by circuitry associated with the cooking hob, said method comprising:
detecting said cooking appliance seated on said cooking hob;
decoding a said magnetic code to identify at least one characteristic of a cooking appliance associated with a said magnetic code;
said magnetic code comprising a plurality of magnets, each said magnet having a north pole and a south pole,
wherein the said magnetic code is determined by the orientation of the poles of said plurality of magnets.

Identifying at least one characteristic of said cooking appliance may include identifying a type of said cooking appliance.

Suitably, the method includes a prior step of detecting the cooking appliance seated on the cooking hob.

Suitably, the method comprises controlling a power output of a driver coupled to an inductive coil of the hob, the controlling of said power output being dependent on a said identified characteristic.

Suitably, said at least one characteristic of a cooking appliance is a cooking profile identifier.

Preferably, the cooking profile identifier indicates a power output requirement of the driver.

According to a fourth aspect there is provided a magnetic decoder for a cooking hob,
said magnetic decoder capable of decoding a magnetic code of a cooking appliance, said magnetic code comprising a plurality of magnets each said magnet having a north pole at the south pole, said magnetic code determined by the orientation of said poles of said plurality of magnets;
the magnetic decoder comprising a plurality of magnetic field sensors;
wherein in operation, when a cooking appliance is placed on said cooking hob, the magnetic code of said cooking appliance is placed over said magnetic decoder, and the magnetic decoder provides a said code indicative of at least one characteristic of a cooking appliance associated with said magnetic field code.

The embodiments include a cooking appliance for use on a cooking hob, the appliance comprising:
a cooking vessel containing a chamber therein;
a base for seating the cooking appliance on a cooking hob;
a plurality of switch engaging regions on the appliance, the switch engaging regions providing a code that identifies at least one characteristic of the cooking appliance; and
an appliance positioning interlock for operatively coupling with an appliance positioning interlock engagement member of a cooking hob to thereby position the cooking appliance on the cooking hob in a predefined location.

Preferably, the appliance positioning interlock is a recess in the cooking appliance.

Suitably, the switch engaging regions include recess in the base.

Preferably, the switch engaging regions include protrusions on the base.

Preferably a code uniquely identifies each appliance from other appliances in the set.

Other aspects of the present invention are as set out in the claims herein.

### Brief Description of the Drawings

For a better understanding of the invention and to show how the same may be carried into effect, there will now be described by way of example only, specific embodiments, methods and processes according to the present invention with reference to the accompanying drawings in which:
Figure 1 is a top plan view of a cooking appliance in accordance with a preferred embodiment of the present invention;
Figure 2 is an underside plan view of the cooking appliance of Figure 1 in accordance with a preferred embodiment of the present invention;
Figure 3 is a side view of the cooking appliance of Figure 1 in accordance with a preferred embodiment of the present invention;
Figure 4 is a top plan view of a cooking hob in accordance with a preferred embodiment of the present invention;
Figure 5 is a part side view of the cooking appliance of Figure 1 resting and positioned on the cooking hob of Figure 4 in accordance with a preferred embodiment of the present invention;
Figure 6 is a schematic block diagram of a cooking hob circuit in accordance with a preferred embodiment of the present invention;
Figure 7 is schematic circuit diagram of a sensor circuit that forms part of a magnet decoder in accordance with a preferred embodiment of the present invention;
Figure 8 is a top plan view of a cooking appliance in accordance with another preferred embodiment of the present invention;
Figure 9 is a top plan view of a cooking appliance in accordance with a further preferred embodiment of the present invention;
Figure 10 is a top plan view of a cooking appliance in accordance with another further preferred embodiment of the present invention;
Figure 11 is an underside plan view of a cooking appliance in accordance with yet another further preferred embodiment of the present invention;
Figure 12 is an underside plan view of a cooking appliance in accordance with yet a further preferred embodiment of the present invention;
Figure 13 is a schematic block diagram of a cooking hob circuit in accordance with another preferred embodiment of the present invention;
Figure 14 is flow diagram illustrating a method of determining a characteristic of a cooking appliance seated on the cooking hob of Figure 4 in accordance with a preferred embodiment of the present invention; and
Figure 15 is an underside plan view of a cooking appliance in accordance with yet another further preferred embodiment of the present invention.

### Detailed Description of the Embodiments

There will now be described by way of example a specific mode contemplated by the inventors. In the following description numerous specific details are set forth in order to provide a thorough understanding. It will be apparent however, to one skilled in the art, that the present invention may be practiced without limitation to these specific details. In other instances, well known methods and structures have not been described in detail so as not to unnecessarily obscure the description.

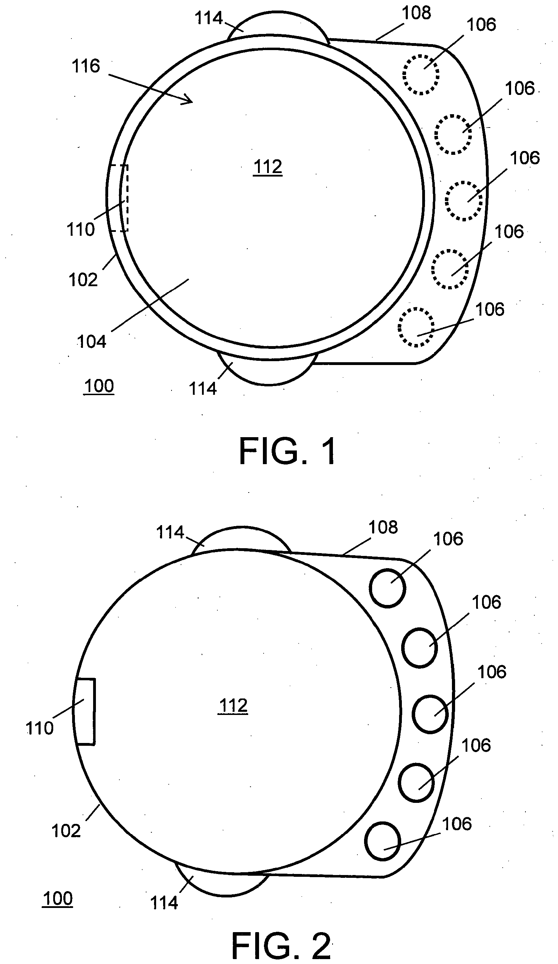

Referring to Figure 1 there is illustrated a top plan view of a cooking appliance 100 in accordance with a preferred embodiment of the present invention. The cooking appliance 100 is for use on a cooking hob, such as an induction hob, and the appliance 100 includes a cooking vessel 102 containing a chamber 104. There are a plurality of magnets 106 mounted to the vessel 102. These magnets 106 provide a magnetic field code MC that identifies at least one characteristic of the cooking appliance. This characteristic can typically be: the type of appliance; the type of cooking provided by the appliance; the required cooking profile of the appliance; a default cooking time for the appliance; or the required inductive power to be supplied to the appliance.

The magnets 106 are in a ridge 108 protruding from the vessel 102 and there is an appliance positioning interlock 110 in the form of a recess in a base 112 of the cooking appliance 100. The cooking appliance 100 also has handles 114 and there is typically a lid (not shown) for placing on top of the vessel to close an opening of the vessel 102 indicated by arrowed numeral 116.

Referring to Figure 2 there is illustrated an underside plan view of the cooking appliance 100 in accordance with a preferred embodiment of the present invention. As shown, the magnets 106 are mounted in the ridge 108 and are spaced apart so that the interference (interaction of magnetic fields) is negligible for the purpose of the provision of the magnetic field code MC.

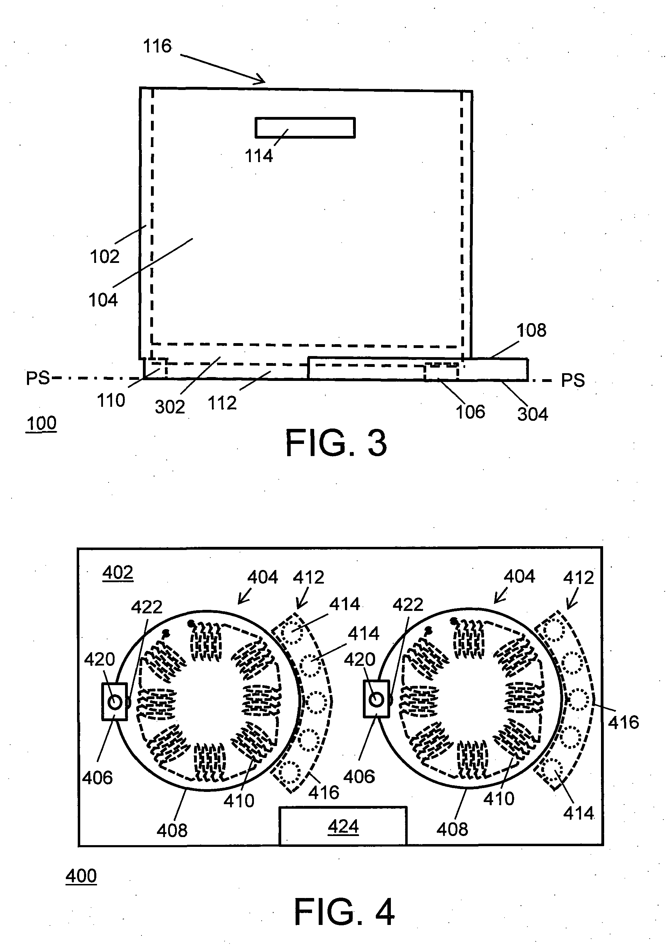

Referring to Figure 3 there is illustrated a side view of the cooking appliance 100 in accordance with a preferred embodiment of the present invention. In this embodiment there is a ferrous based inductive heating member 302 that forms part of the base 112. In this embodiment the ferrous based inductive heating member 302 is disc shaped and is forged/formed or integrally moulded to the vessel 102 which is made typically from aluminum or other non-ferrous based metals or metal alloys. The base 112 provides for seating the cooking appliance 100 on a cooking hob and the ridge forms part of the base 102 which has a seating plane PS that is co-planar with a lower surface 304 of the ridge 108. The inductive heating member 302, in operation, heats up when placed proximal to an alternating electromagnetic filed or a pulsed electromagnetic filed as is well known in the art.

The appliance 100 is characterised by the magnets 106 being located in respective precise positions relative to the appliance positioning interlock 110. Hence, when the appliance 100 is placed on a cooking hob at a location determined by the appliance positioning interlock 110, the plurality of magnets 106 are positioned over one or more magnetic sensors of the hob. In other words, the appliance positioning interlock 110 is configured for operatively coupling with an appliance positioning interlock engagement member of a cooking hob to thereby position the cooking appliance 100 on the cooking hob in a predefined location. Also, each of the magnets 108 is oriented so that the polarity of their magnetic fields is dependent on their location relative to the appliance positioning interlock.

The ridge 108 is made of a non-ferrous based material, typically aluminum so that the paths of the magnetic fields from the magnets 106 are not substantially affected by the ridge 108. Also, a surface of each of the magnets is flush with the seating plane SP as shown in this illustration.

Referring to Figure 4 there is illustrated a top plan view of an Induction cooking hob 400 in accordance with a preferred embodiment of the present invention. The cooking hob 400 (for induction cooking) in this embodiment includes a cooking appliance support surface 402 and two cooking rings 404 each of which has an appliance positioning interlock engagement member 406 which in this embodiment is a protrusion on the support surface 402. The two cooking rings 404 have perimeter markings 408 displayed on the support surface 402 that are essentially for aesthetic appeal and as a marker for guiding a user of where to place the cooking appliance 100. Each of the cooking rings 404 have an inductive coil or coils 410 (shown in phantom) under the cooking appliance support surface 402 and the coils 410 are positioned within the perimeter markings 408.

Each of the cooking rings 404 also has a magnet decoder 412 that includes a plurality of positioned magnetic field sensors 414 adjacent an under side of the support surface 402. The magnetic field sensors 414 are located at positions relative to the appliance positioning interlock engagement member 406 and there is a magnetic shield in the form of a ferrous wall enclosure 416 for shielding the magnetic field sensors 414 from magnetic field generated by the inductive coil or coils 410.

Associated with each appliance positioning interlock engagement member 406 are two appliance engagement sensors 420 and 422 that in this embodiment are toggle switches with their actuators protruding from an upper surface (for sensor 420) and side surface (for sensor 422) of the interlock engagement member 406. However, it is envisaged that other forms of appliance engagement sensors can be used such as photo sensors, magnetic field sensors, capacitance sensors and inductance sensors. It is also envisaged that only one of the appliance engagement sensors 420 and 422 is required in some embodiments and in further embodiment the need for such sensors can be removed. However, the use of both engagement sensors 420 and 422 offers additional safety and reliability of the present invention performing as required.

The cooking hob 400 also has a user interface 424 that allows a user to view information such as cooking temperatures, settings, cooking times as well as allowing the user to switch the cooking hob 400 on and off, adjust cooking settings, adjust temperatures and adjust cooking timing. Other features, such as temperature sensors for monitoring the temperature of respective appliances on the hob 400 are known in the art and are therefore not described.

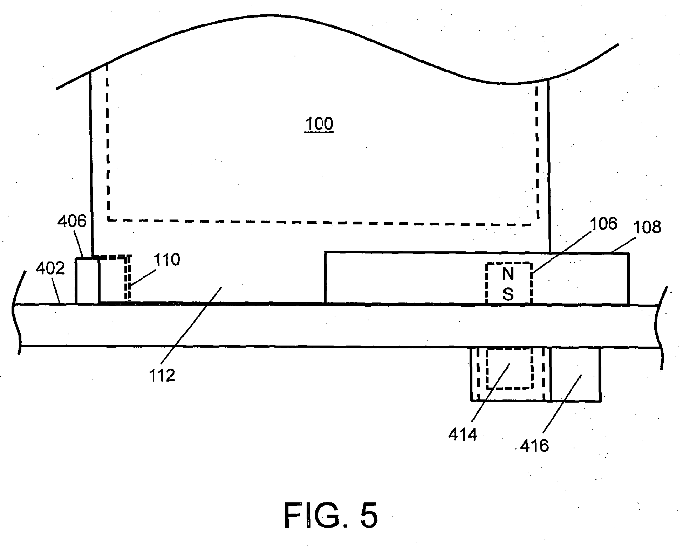

Referring to Figure 5 there is illustrated a part side view of the cooking appliance 100 resting and positioned on the cooking hob 400 in accordance with a preferred embodiment of the present invention. As illustrated, the appliance positioning interlock engagement member 406 has operatively engaged the appliance positioning interlock 110 so that the engagement sensors 420, 422 are actuated and detect the presence of the cooking appliance 100. In this regard, the engagement sensors 420, 422 can only be actuated when the appliance positioning interlock engagement member 406 fully engages the appliance positioning interlock 110. When the appliance positioning interlock engagement member 406 fully engages the appliance positioning interlock 110, each of the magnets 406 will be aligned with a respective magnetic field sensor 404 as will be apparent to a person skilled in the art. Also, it should be noted that the appliance positioning interlock engagement member 406 and the appliance positioning interlock 110 may be tapered or otherwise shaped so that their mutual engagement is orientation dependent thus ensuring alignment of each of the magnets 106 with their respective magnetic field sensor 404. When so aligned, the magnetic field of each magnet 106 passes through the respective magnetic field sensor 404 and thus, depending on the orientation of each magnet 106, each sensor 404 will either detect a North Pole or South Pole magnetic field.

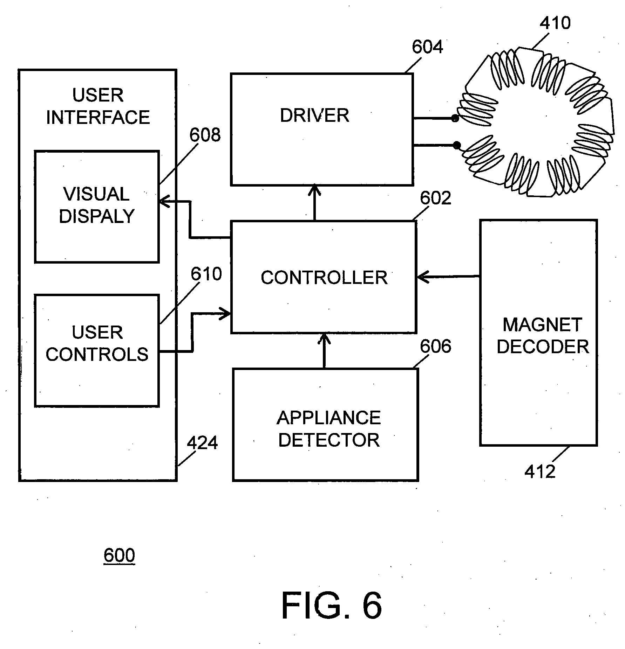

Referring to Figure 6 there is illustrated a schematic block diagram of a cooking hob circuit 600 in accordance with a preferred embodiment of the present invention. The cooking hob circuit 600 is part of the cooking hob 400 and the cooking hob circuit 600 includes the inductive coil or coils 410 coupled to an output of a driver 604. A controller 602 is coupled to the driver 604 and there is also an appliance detector 606 having an output (or outputs) coupled to the controller 602. The appliance detector 606 includes at least one of the appliance engagement sensors 420, 422 as will be apparent to a person skilled in the art. The magnet decoder 412 and user interface 608 are also coupled to the controller 602, where the user interface 608 includes a visual display and user controls.

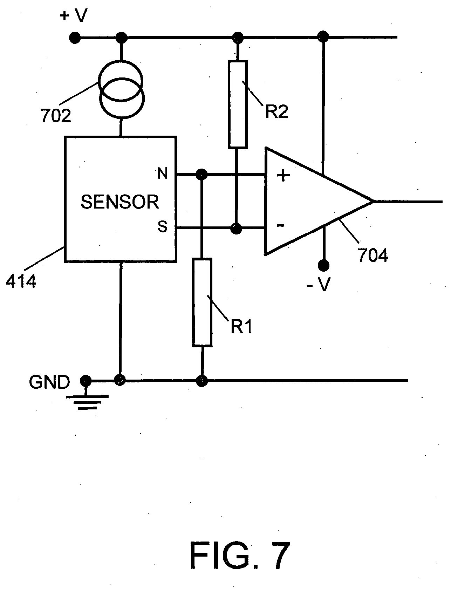

Referring to Figure 7 there is illustrated a schematic circuit diagram of a sensor circuit 700 that forms part of the magnet decoder 412 in accordance with a preferred embodiment of the present invention. The sensor circuit 700 includes a constant current source 702 coupled to a positive supply rail +V and supplying a voltage input to a positive supply input of the magnetic field sensor 414. This sensor 414 is a Hall Effect sensor with a reference supply input coupled to ground GND. The sensor 414 has two outputs N and S, the N output is coupled to a non-inverting input of an operational amplifier 704 and the S output is coupled to an inverting input of the operational amplifier 704. The N output is also coupled to ground GND through a pull-down resistor R1, whereas the S output is coupled to the positive supply rail +V through a pull-up resistor R2. The positive supply rail +V and a negative supply rail -V are coupled to power supply inputs of the operational amplifier 704 which has an output that therefore swings between +V and -V.

When there is no magnetic field sensed by the magnetic field sensor 414 the voltage at the inverting input is pulled towards the positive supply rail +V and the voltage at the negative supply rail -V is pulled towards ground GND. Consequently, the voltage at the output of the operational amplifier 704 will be -V until a North Pole of a magnetic field is sensed by the magnetic field sensor 414.

When considering the embodiment of the above cooking hob 400, the magnet decoder 412 of one of the cooking rings 404 has 5 sensor circuits 700 that can each provide output values of logic 1 (+V) or logic 0 (-V). When there is no cooking appliance 100 on the cooking ring 404 the output logic values are all logic 0 and provide a 5 bit code of 00000 indicating that no cooking appliance is present. However, when there is a cooking appliance 100 on the cooking ring 404 and the engagement member 406 fully engages the appliance positioning interlock 110, the magnets 106 provide the magnetic field code MC to the magnetic field sensors 414. Thus since there are 5 magnetic field sensors 414, detecting the magnetic field polarity of an aligned magnet 106, the magnet decoder 412 can detect and distinguish 31 magnetic field codes MC (the 00000 code is not included as this indicates no cooking appliance is present).

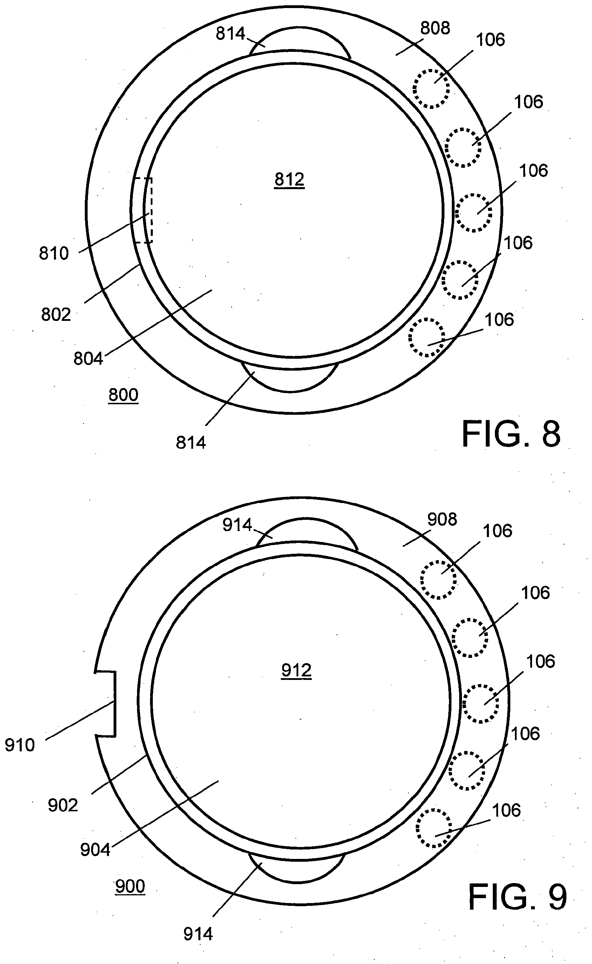

Referring to Figure 8 there is illustrated a top plan view of a cooking appliance 800 in accordance with another preferred embodiment of the present invention. The cooking appliance 800 is for use on the cooking hob 400 and the appliance 800 includes a cooking vessel 802 containing a chamber 804. There are a plurality of magnets 106 (similar to the magnets mentioned above) mounted to the vessel 802. These magnets 106 provide the magnetic field code MC that identifies at least one characteristic of the cooking appliance.

The magnets 106 are in a ridge that is a flange 808 protruding from the vessel 802 and there is an appliance positioning interlock 810 in the form of a recess in a base 812 of the cooking appliance 800. The cooking appliance 800 also has handles 814 and there is typically a lid (not shown) for placing on top of the vessel to close an opening of the vessel 802. The appliance 800 has a ferrous based inductive heating member (not illustrated) in the base 812 that is heated when placed proximal to the coils 410 of the operating cooking hob 400 (in a similar fashion the appliance 100) as will be apparent to a person skilled in the art.

Referring to Figure 9 there is illustrated a top plan view of a cooking appliance 900 in accordance with a further preferred embodiment of the present invention. The cooking appliance 900 is for use on the cooking hob 400 when the appliance engagement sensors 420 and 422 have actuators that are located or protruding from side surfaces of the interlock engagement member 406.

The cooking appliance 900 includes a cooking vessel 902 containing a chamber 904. There are a plurality of magnets 106 (similar to the magnets mentioned above) mounted to the vessel 902. These magnets 106 provide the magnetic field code MC that identifies at least one characteristic of the cooking appliance. The magnets 106 are in a ridge that is a flange 908 protruding from the vessel 902 and there is an appliance positioning interlock 910 in the form of a recess or slot in a base 912 of the cooking appliance 900. More specifically, the appliance positioning interlock 910 is integral with the ridge which is the flange 908 in this embodiment.

The cooking appliance 900 also has handles 914 and there is typically a lid (not shown) for placing on top of the vessel to close an opening of the vessel 902. Again, the appliance 900 has a ferrous based inductive heating member (not illustrated) in the base 912 that is heated when placed proximal to the coils 410 of the operating cooking hob 400 (in a similar fashion the appliance 100). Also, the appliance 900 can be used on the cooking hob 400 (with appropriately positioned actuators for the appliance engagement sensors 420, 422) as will be apparent to a person skilled in the art.

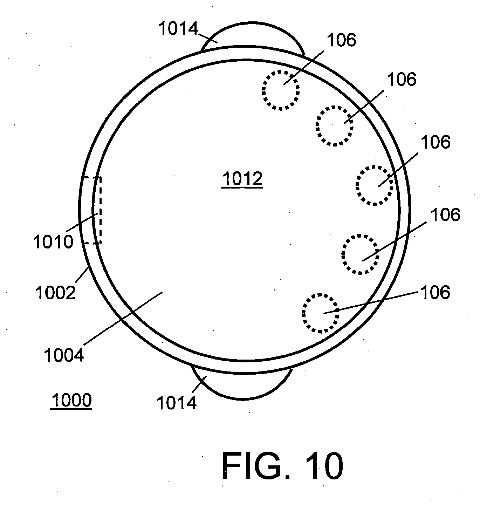

Referring to Figure 10 there is illustrated a top plan view of a cooking appliance 1000 in accordance with another further preferred embodiment of the present invention. The cooking appliance1000 is for use on the cooking hob 400 and the appliance 1000 includes a cooking vessel 1002 containing a chamber 1004. There are a plurality of magnets 106 (similar to the magnets mentioned above) mounted to the vessel 1002. These magnets 106 provide the magnetic field code MC that identifies at least one characteristic of the cooking appliance.

The magnets 106 are located in a base 1012 of the cooking appliance 1000 and there is an appliance positioning interlock 1010 in the form of a recess in the base 1012 of the cooking appliance 1000. The cooking appliance 1000 also has handles 1014 and there is typically a lid (not shown) for placing on top of the vessel to close an opening of the vessel 1002. The appliance 1000 has a ferrous based inductive heating member (not illustrated) in the base 1012 and the appliance 1000 can be used on the cooking hob 400 in a similar fashion the appliance 100 as will be apparent to a person skilled in the art. In this regard, the size of the appliance (in this case its vessel diameter) is larger than that of the appliance 100 so as to align the magnets 106 with the sensors 414.

From the above it will be apparent that the present invention allows for a set of cooking appliances SCA formed from, for instance, appliances similar to the cooking appliances 100, 800, 900 and 1000. The set of cooking appliances SCA can comprise up to 31 such appliances where the characteristic represented by the magnetic field code MC uniquely identifies each of the appliances from the other appliances in the set of cooking appliances SCA. For example, a first cooking appliance in the set of cooking appliances SCA may have a magnetic field code from the 5 magnets 106 of SSSSN which is decoded by the magnet decoder 412 as 00001 which may identify the characteristic CH of the cooking appliance 100 as a shallow frying pan. As another example, a second cooking appliance in the set of cooking appliances SCA may have a magnetic field code MC from the 5 magnets 106 of SSSNS which is decoded by the magnet decoder 412 as 00010 which may identify the characteristic CH of the cooking appliance 100 as a deep frying pan. The full set of magnetic field codes, decoded logic values by the magnet decoder 412 and the meaning of the logic values as determined by the controller 602 is shown in table 1 below.

In table 1 magnetic field codes NSSNN to NNNNN have yet to be assigned a characteristic, however, when required a characteristic of a new appliance can be programmed into the cooking hob 400 by use of a USB memory stick or by any other appropriate means. The characteristics Ch typically, either directly or indirectly, identifies the type of cooking appliance 100, 800, 900 or 1000 and relates to a cooking profile of the cooking appliance 100, 800, 900 or 1000. The characteristic is therefore used by the controller 602 to control the power output of a driver 604 that powers the inductive coil 410 of the hob 400.

| Magnetic field code MC | Decoded logic values | Characteristic CH |
|---|---|---|
| SSSSS | 00000 | No appliance present |
| SSSSN | 00001 | Shallow fryer |
| SSSNS | 00010 | Deep fryer |
| SSSNN | 00011 | Egg Boiler |
| SSNSS | 00100 | Steamer |
| SSNSN | 00101 | Sous Vide cooker |
| SSNNS | 00110 | Boiling Pan |
| SSNNN | 00111 | Steamer |
| SNSSS | 01000 | Barbeque |
| SNSSN | 01001 | Griller |
| SNSNS | 01010 | Toaster |
| SNSNN | 01011 | Slow Cooking Oven |
| SNNSS | 01100 | Fast Cooking Oven |
| SNNSN | 01101 | Bain Marie |
| SNNNS | 01110 | Blanching cooker |
| SNNNN | 01111 | Simmering pan |
| NSSSS | 10000 | Egg Poacher |
| NSSSN | 10001 | Kettle |
| NSSNS | 10010 | Coffee Percolator |
| NSSNN to NNNNN | 10011 to 11111 | Undesignated |

Table 1 magnetic field codes decoded logic values and their decoded cooking characteristics.

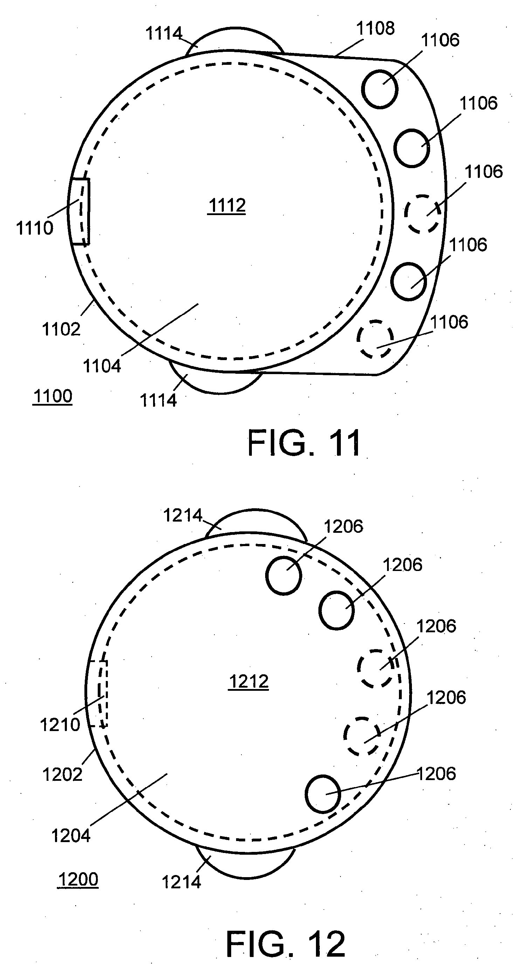

Referring to Figure 11 there is illustrated is an underside plan view of a cooking appliance 1100 in accordance with yet another further preferred embodiment of the present invention. The cooking appliance 1100 is for use on a cooking hob similar to the hob 400 with the magnetic field sensors 414 replaced with switches as described below. The appliance 1100 includes a cooking vessel 1102 containing a chamber 1104. There is a plurality of switch engaging regions 1106 on a base 1112 or a ridge 1108 of the appliance 1100. These switch engaging regions 1106 provide a code MC that identifies at least one characteristic of the cooking appliance. The code MC is provided by recessed (recesses) and non-recessed areas on the base 1112 where the non-recessed areas 1106 are indicated by dashed lines. Alternatively, the code MC is provided by protruding (protrusions) and non-protruding areas on the base 1112 where the non-protruding areas 1106 are indicated by dashed lines.

In this embodiment the base 1112 includes the ridge 1108 and there is an appliance positioning interlock 1110 in the form of a recess in the base 1112 of the cooking appliance 1100. The cooking appliance 1100 also has handles 1114 and there is typically a lid (not shown) for placing on top of the vessel to close an opening of the vessel 1102. The appliance 1100 has a ferrous based inductive heating member (not illustrated) in the base 1112 and all other features of the appliance 1100 are similar to the appliance 100.

Referring to Figure 12 there is illustrated is an underside plan view of a cooking appliance 1100 in accordance with yet a further preferred embodiment of the present invention. The cooking appliance1200 is for use on a cooking hob similar to the hob 400 with the magnetic field sensors 414 replaced with switches as described below. The appliance 1200 includes a cooking vessel 1202 containing a chamber 1204. There is a plurality of switch engaging regions 1206 on a base 1212 of the appliance 1200. These switch engaging regions 1206 provide a code MC that identifies at least one characteristic of the cooking appliance. The code MC is provided by recessed (recesses) and non-recessed areas on the base 1212 where the non-recessed areas 1206 are indicated by dashed lines. Alternatively, the code MC is provided by protruding (protrusions) and non-protruding areas on the base 1212 where the non-protruding areas 1206 are indicated by dashed lines.

The cooking appliance 1200 also has handles 1214 and there is typically a lid (not shown) for placing on top of the vessel to close an opening of the vessel 1202. The appliance 1200 has a ferrous based inductive heating member (not illustrated) in the base 1112 and the appliance 1100 can be used on a suitable cooking hob in a similar fashion the appliance 1100 as will be apparent to a person skilled in the art. In this regard, the size of the appliance (in this case its vessel diameter) is larger than that of the appliance 1100 so as to align the switch engaging regions 1206 with the switch actuators as described below.

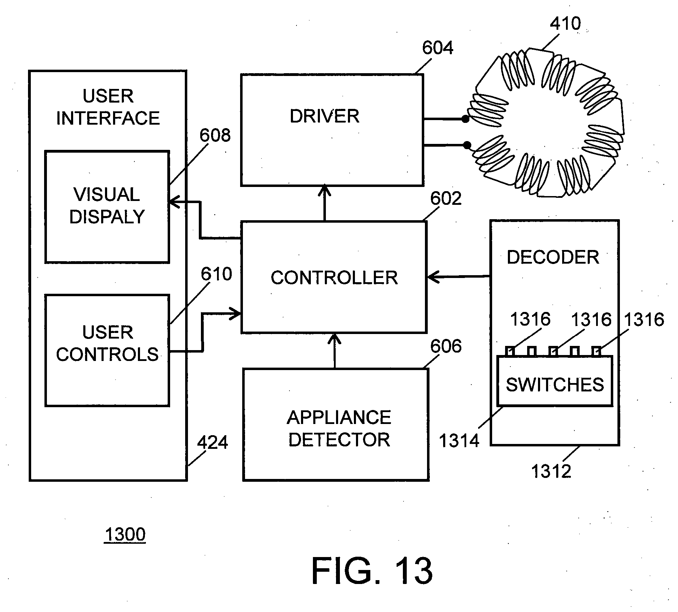

Referring to Figure 13 there is illustrated a schematic block diagram of a cooking hob circuit 1300 in accordance with another preferred embodiment of the present invention. The cooking hob circuit 1300 is part of the cooking hob 400 with the sensors 414 replaced with switches 1314. Also the support surface 402 of the cooking hob 400 is modified to allow actuators 1316 of the switches 1314 to protrude from the cooking appliance support surface 402. The cooking hob circuit 1300 includes the inductive coil or coils 410 coupled to an output of a driver 604. A controller 602 is coupled to the driver 604 and there is also an appliance detector 606 having an output (or outputs) coupled to the controller 602. The appliance detector 606 includes at least one of the appliance engagement sensors 420, 422 as will be apparent to a person skilled in the art. A decoder 1312 and user interface 608 are also coupled to the controller 602, where the user interface 608 includes a visual display and user controls. Also, the decoder 1312 includes switches 1314 with the actuators 1316 that are selectively actuated when aligned with the switch engaging regions 1106 or 1206 of an appliance. More specifically, the actuators are selectively actuated by engagement with non-recessed areas of the engaging regions 1206 or by engagement with the protruding areas 1206. In this regard, the switches 1314 may be either biased as normally open or normally closed and the actuators may be of the ball- bearing type as will be apparent to a person skilled in the art.

In operation, the decoder 1312 provides a code to the controller 602, the code being indicative of a characteristic of a cooking appliance seated on the support surface 402 and engaging the appliance positioning interlock engagement member 406, and wherein the switches are selectively actuated to provide the code by engagement with the switch engaging regions 1106 or 1206 on the base of the appliance. The code can be used in a similar fashion as described above with reference to table 1 in which the output values from the switches are wither a logic 1 or logic zero.

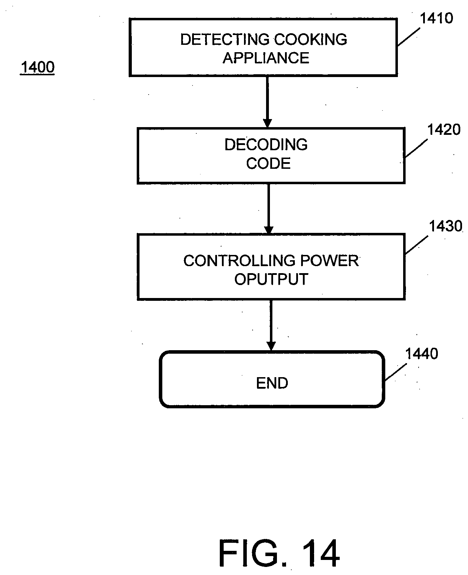

Referring to Figure 14 there is a flow diagram illustrating a method 1400 of determining a characteristic of a cooking appliance seated on the cooking hob 400 in accordance with a preferred embodiment of the present invention. Although the method 140 is described with reference to the cooking hob 400, it is to be understood that the method can be performed on other forms of cooking hobs such as the cooking hob that includes the cooking hob circuit 1300.

The method 1400 is performed by the circuitry 600 associated with the cooking hob 400 and will be described, by way of example only, with reference to cooking appliance 100. The method 1100 includes, at a detecting block 1410, a process of detecting the cooking appliance 100 seated on the cooking hob 400. This occurs when the appliance positioning interlock 110 operatively couples with the appliance positioning interlock engagement member 404 to thereby position the cooking appliance 100 on the cooking hob 400 in a predefined location. This predefined location ensures that the magnets 106 (or switch engaging regions 1106, 1206) are aligned with their respective sensors 414 (switch actuators) and when so aligned the detecting is complete when the appliance engagement sensors 420 and 422 are actuated to provide a detection signal. The sensors in one embodiment may however be used to switch on the cooking hob 400.

At a decoding block 1420 the method 1400 perform a process of decoding the magnetic field code MC to identify a characteristic CH of a cooking appliance 100 seated on the cooking hob 400. This magnetic field code MC is the code provided by the magnetic fields supplied from the plurality of magnets 106 mounted on the cooking appliance 100. In alternative embodiment, the code MC is decoded by actuation of the switches 1314 being selectively actuated by the switch engaging regions 1206.

The characteristic CH is determined from table 1, which is stored in a memory of the controller 602, and the method 1400, at a controlling block 1430, performs a controlling the power output of driver 604. The controlling is dependent on the characteristic Ch which can be: the type of appliance; the type of cooking provided by the appliance; the required cooking profile of the appliance; a default cooking time for the appliance; or the required inductive power to be supplied to the appliance (the power output requirement of the driver 604).

If the characteristic Ch is a cooking profile, the controller 602 determines that the characteristic Ch provided from the binary code from the magnet decoder 412 or decoder 1312 is a cooking profile identifier. For example, if the decoded logic value is 00011 then the characteristic CH is an egg boiler which has a specific cooking profile and thus the driver 604 is set to provide a suitable power output to heat the ferrous based inductive heating member 302. In some embodiments the controlling can be such that the driver provides power for a pre-defined time, or a pre-defined time once the egg boiler has reached a required temperature, measured by a temperature sensor (such sensors are a well know feature of induction hobs). The method 1400 then ends at an end block 1440.

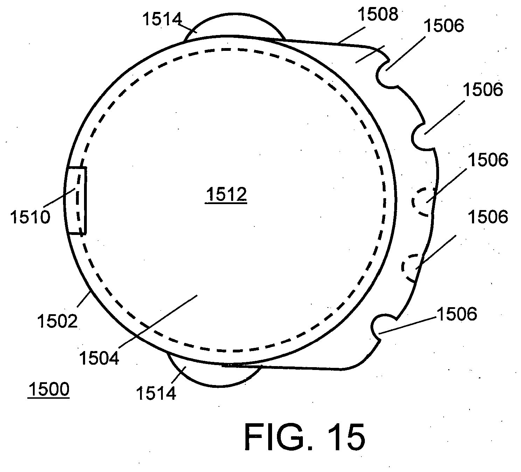

Other embodiments of the present invention will be apparent to a person skilled in the art. This is apparent when referring to Figure 15 which illustrates an underside plan view of a cooking appliance 1500 in accordance with yet another further preferred embodiment of the present invention. The appliance 1500 includes a cooking vessel 1502 containing a chamber 1504. There is a plurality of switch engaging regions 1506 on a base 1512 or a ridge 1508 of the appliance 1500. These switch engaging regions 1506 provide a code MC that identifies at least one characteristic of the cooking appliance. The code MC is provided by recessed (recesses) and non-recessed areas on the ridge 1512 where the non-recessed areas 1506 are indicated by dashed lines. These recessed areas are slots cut in an edge of the ridge. Alternatively, the non-recessed areas 1506 can be protrusions on the edge of the ridge as will be apparent to a person skilled in the art.

In this embodiment the base 1512 includes the ridge 1508 and there is an appliance positioning interlock 1510 in the form of a recess in the base 1512 of the cooking appliance 1500. The cooking appliance 1500 also has handles 1514 and there is typically a lid (not shown) for placing on top of the vessel to close an opening of the vessel 1502. The appliance 1500 has a ferrous based inductive heating member (not illustrated) in the base 1512 and all other features of the appliance 1500 are similar to the appliance 100.

Advantageously the present invention allows for a characteristic CH of the cooking appliance 100 to be communicated to the induction hob or cooking hob 400 without the need for radio transmitters or transceivers. The characteristic CH is communicated to the hob by either the switch engaging regions 1106, 1206 or the magnets 106 which are relatively robust permanent magnets whose magnetic fields are not normally permanently damage or affected by water when the appliance is washed in a washing bowl or even when washed in a dishwashing machine. Once the CH is communicated the cooking hob heats the appliance and the cooking profile is displayed on the visual display 608. A user can thus place a cooking appliance 100 on the cooking hob 400 so that it engages the appliance positioning interlock engagement member and view the display 608 to check the automatically initiated cooking setting. The user can then take their time clean or dry their hands (after preparing the food being cooked) before making any adjustments to the cooking setting by use of the controls 610.

## Claims

1. A cooking appliance (100) for use on a cooking hob, the appliance comprising:
a cooking vessel (102) containing a chamber (104) therein; and
a magnetic code comprising a plurality of magnets (106), each said magnet having a north pole and a south pole,
**characterised in that**
the magnetic code is determined by the orientation of the poles of said plurality of magnets (106) wherein said magnetic code identifies at least one characteristic of the cooking appliance.

2. The cooking appliance, as claimed in claim 1, further including an appliance positioning interlock (110) for operatively coupling with an appliance positioning interlock engagement member (406) of a cooking hob to thereby position the cooking appliance on the cooking hob in a predefined location.

3. The cooking appliance, as claimed in any preceding claim, further including a ferrous based inductive heating member associated with the vessel.

4. A set of cooking appliances, each of the appliances comprising an appliance as claimed in any one of claims 1 to 3, wherein each magnetic code uniquely identifies its associated appliance from the other appliances in the set.

5. A cooking hob comprising:
at least one inductive coil;
a driver having an output coupled to the inductive coil;
a controller coupled to the driver; and
a magnetic decoder coupled to the controller, the magnetic decoder comprising a plurality of magnetic field sensors,
wherein in operation, when a magnetic code comprising a plurality of magnets each said magnet having a north pole and a south pole, the magnetic code determined by the orientation of the poles of said plurality of magnets is placed over the magnetic decoder, the magnetic decoder provides said code to the controller, the code being indicative of at least one characteristic of a cooking appliance associated with said code.

6. The cooking hob, as claimed in claim 5, wherein the characteristic of a said cooking appliance relates to a type of cooking appliance.

7. The cooking hob, as claimed in claim 6, wherein the characteristic of a said cooking appliance relates to a cooking profile of the appliance.

8. The cooking hob, as claimed in any one of claims 5 to 7, further including an appliance positioning interlock engagement member.

9. The cooking hob, as claimed in claim 8, wherein there is at least one appliance engagement sensor associated with the appliance positioning interlock engagement member.

10. A method of determining a characteristic of a cooking appliance seated on a cooking hob, the method being performed by circuitry associated with the cooking hob, said method comprising:
detecting said cooking appliance seated on said cooking hob;
decoding a magnetic code to identify at least one characteristic of a cooking appliance associated with said magnetic code,
said magnetic code comprising a plurality of magnets, each said magnet having a north pole and a south pole,
wherein the magnetic field code is determined by the orientation of the poles of said plurality of magnets.

11. The method as claimed in claim 10, further comprising:
controlling a power output of a driver coupled to an inductive coil of the hob, the controlling of said power output being dependent on a said identified characteristic.

12. The method as claimed in claim 10 or 11, wherein said at least one characteristic of a cooking appliance is a cooking profile identifier.

13. The method as claimed in claim 12, wherein the cooking profile identifier indicates a power output requirement of the driver.

14. A magnetic decoder for a cooking hob,
said magnetic decoder capable of decoding a magnetic code of a cooking appliance, said magnetic code comprising a plurality of magnets each said magnet having a north pole and a south pole, said magnetic code determined by the orientation of said poles of said plurality of magnets;
the magnetic decoder comprising a plurality of magnetic field sensors,
wherein in operation, when a said cooking appliance is placed on said cooking hob, a magnetic code of said cooking appliance is placed over the magnetic decoder, and the magnetic decoder provides a said code indicative of a characteristic of at least one cooking appliance associated with the magnetic code.

## Patentansprüche

1. Kochvorrichtung (100) zur Verwendung auf einem Kochfeld, wobei die Vorrichtung Folgendes umfasst:
ein Kochgefäß (102), das eine Kammer (104) darin enthält; und
einen Magnetcode, wobei der Magnetcode eine Vielzahl von Magneten (106) umfasst, wobei jeder Magnet einen Nordpol und einen Südpol aufweist,
**dadurch gekennzeichnet, dass**
der Magnetcode durch die Orientierung der Pole der Vielzahl von Magneten (106) bestimmt wird, wobei der Magnetcode zumindest eine Eigenschaft der Kochvorrichtung identifiziert.

2. Kochvorrichtung nach Anspruch 1, ferner umfassend eine Vorrichtungspositionsverriegelung (110) zur Wirkverbindung mit einem Vorrichtungspositionsverriegelungs-Eingriffselement (406) eines Kochfelds, um die Kochvorrichtung dadurch auf dem Kochfeld in einer vordefinierten Position zu platzieren.

3. Kochvorrichtung nach einem der vorhergehenden Ansprüche, ferner umfassend ein induktives Heizelement auf Eisenbasis, das mit dem Gefäß assoziiert ist.

4. Satz von Kochvorrichtungen, wobei jede der Vorrichtungen eine Vorrichtung nach einem der Ansprüche 1 bis 3 umfasst, wobei jeder Magnetcode seine assoziierte Vorrichtung eindeutig gegenüber den anderen Vorrichtungen im Satz identifiziert.

5. Kochfeld, umfassend:
zumindest eine Induktionsspule;
einen Treiber mit einem Ausgang, der mit der Induktionsspule gekoppelt ist;
eine Steuereinheit, die mit dem Treiber gekoppelt ist; und
einen mit der Steuereinheit gekoppelten Magnet-Dekodierer, wobei der Magnet-Dekodierer eine Vielzahl von Magnetfeldsensoren umfasst,
wobei im Betrieb, wenn ein Magnetcode, der eine Vielzahl von Magneten umfasst, wobei jeder Magnet einen Nordpol und einen Südpol aufweist, wobei der Magnetcode von der Orientierung der Pole der Vielzahl von Magneten bestimmt wird, über den Magnet-Dekodierer platziert wird, der Magnet-Dekodierer den Code für die Steuereinheit bereitstellt, wobei der Code auf mindestens eine Eigenschaft einer mit dem Code assoziierten Kochvorrichtung hinweist.

6. Kochfeld nach Anspruch 5, wobei die Eigenschaft der Kochvorrichtung eine Art von Kochvorrichtung betrifft.

7. Kochfeld nach Anspruch 6, wobei die Eigenschaft der Kochvorrichtung ein Kochprofil der Vorrichtung betrifft.

8. Kochfeld nach einem der Ansprüche 5 bis 7, ferner umfassend ein Vorrichtungspositionsverriegelungs-Eingriffselement.

9. Kochfeld nach Anspruch 8, wobei zumindest ein Vorrichtungseingriffssensor mit dem Vorrichtungspositionsverriegelungs-Eingriffselement assoziiert ist.

10. Verfahren zur Bestimmung einer Eigenschaft einer Kochvorrichtung, die auf einem Kochfeld sitzt, wobei das Verfahren von Schalttechnik ausgeführt wird, die mit dem Kochfeld assoziiert ist, wobei das Verfahren Folgendes umfasst:
Erkennung der auf dem Kochfeld sitzenden Kochvorrichtung;
Dekodierung eines Magnetcodes zur Identifizierung mindestens einer Eigenschaft einer mit dem Magnetcode assoziierten Kochvorrichtung,
wobei der Magnetcode eine Vielzahl von Magneten umfasst, wobei jeder Magnet einen Nordpol und einen Südpol aufweist,
wobei der Magnetfeldcode von der Orientierung der Pole der Vielzahl von Magneten bestimmt wird.

11. Verfahren nach Anspruch 10, weiter umfassend:
Steuerung einer Leistungsabgabe eines Treibers, der mit einer Induktionsspule des Felds gekoppelt ist, wobei die Steuerung der Leistungsabgabe von der identifizierten Eigenschaft abhängig ist.

12. Verfahren nach Anspruch 10 oder 11, wobei die mindestens eine Eigenschaft einer Kochvorrichtung ein Kochprofil-Identifikator ist.

13. Verfahren nach Anspruch 12, wobei der Kochprofil-Identifikator auf eine erforderliche Leistungsabgabe des Treibers hinweist.

14. Magnet-Dekodierer für ein Kochfeld,
wobei der Magnet-Dekodierer in der Lage ist, einen Magnetcode einer Kochvorrichtung zu dekodieren, wobei der Magnetcode eine Vielzahl von Magneten umfasst, wobei jeder Magnet einen Nordpol und einen Südpol aufweist, wobei der Magnetcode von der Orientierung der Pole der Vielzahl von Magneten bestimmt wird;
wobei der Magnet-Dekodierer eine Vielzahl von Magnetfeldsensoren umfasst,
wobei im Betrieb, wenn eine solche Kochvorrichtung auf dem Kochfeld platziert wird, ein Magnetcode der Kochvorrichtung über den Magnet-Dekodierer platziert wird und der Magnet-Dekodierer einen Code bereitstellt, der auf eine Eigenschaft mindestens einer mit dem Magnetcode assoziierten Kochvorrichtung hinweist.

## Revendications

1. Appareil de cuisson (100) destiné à être utilisé sur une plaque de cuisson, l'appareil comprenant :
un récipient de cuisson (102) contenant une chambre (104) en son sein ; et
un code magnétique comprenant une pluralité d'aimants (106), chaque dit aimant ayant un pôle nord et un pôle sud,
**caractérisé en ce que**
le code magnétique est déterminé par l'orientation des pôles de ladite pluralité d'aimants (106), dans lequel ledit code magnétique identifie au moins une caractéristique de l'appareil de cuisson.

2. Appareil de cuisson selon la revendication 1, comprenant en outre un dispositif de verrouillage de positionnement d'appareil (110) pour être couplé de manière fonctionnelle à un élément (406) de contact de dispositif de verrouillage de positionnement d'appareil d'une plaque de cuisson pour positionner, de ce fait, l'appareil de cuisson sur la plaque de cuisson à un endroit prédéfini.

3. Appareil de cuisson selon l'une quelconque des revendications précédentes, comprenant en outre un élément de chauffage à induction à base ferreuse associé au récipient.

4. Ensemble d'appareils de cuisson, chaque appareil comprenant un appareil selon l'une quelconque des revendications 1 à 3, dans lequel chaque code magnétique identifie uniquement son appareil associé parmi les autres appareils de l'ensemble.

5. Plaque de cuisson comprenant :
au moins une bobine d'induction ;
un circuit d'excitation ayant une sortie couplée à la bobine d'induction ;
un dispositif de commande couplé au circuit d'excitation ; et
un décodeur magnétique couplé au dispositif de commande, le décodeur magnétique comprenant une pluralité de capteurs de champ magnétique,
dans laquelle, en fonctionnement, lorsqu'un code magnétique comprenant une pluralité d'aimants, chaque dit aimant ayant un pôle nord et un pôle sud, le code magnétique déterminé par l'orientation des pôles de ladite pluralité d'aimants, est situé au dessus du décodeur magnétique, le décodeur magnétique fournit ledit code au dispositif de commande, le code indiquant au moins une caractéristique d'un appareil de cuisson associé audit code.

6. Plaque de cuisson selon la revendication 5, dans laquelle la caractéristique d'un dit appareil de cuisson se rapporte à un type d'appareil de cuisson.

7. Plaque de cuisson selon la revendication 6, dans laquelle la caractéristique d'un dit appareil de cuisson se rapporte à un profil de cuisson de l'appareil.

8. Plaque de cuisson selon l'une quelconque des revendications 5 à 7, comprenant en outre un élément de contact de dispositif de verrouillage de positionnement d'appareil.

9. Plaque de cuisson selon la revendication 8, dans laquelle il y a au moins un capteur de contact d'appareil associé à l'élément de contact de dispositif de verrouillage de positionnement d'appareil.

10. Procédé de détermination d'une caractéristique d'un appareil de cuisson placé sur une plaque de cuisson, le procédé étant réalisé par un ensemble de circuits associé à la plaque de cuisson, ledit procédé consistant à :
détecter ledit appareil de cuisson placé sur ladite plaque de cuisson ;
décoder un code magnétique pour identifier au moins une caractéristique d'un appareil de cuisson associé audit code magnétique,
ledit code magnétique comprenant une pluralité d'aimants, chaque dit aimant ayant un pôle nord et un pôle sud,
dans lequel le code de champ magnétique est déterminé par l'orientation des pôles de ladite pluralité d'aimants.

11. Procédé selon la revendication 10, consistant en outre à :
commander une sortie de puissance d'un circuit d'excitation couplée à une bobine d'induction de la plaque, la commande de ladite sortie de puissance étant dépendante d'une dite caractéristique identifiée.

12. Procédé selon la revendication 10 ou 11, dans lequel ladite au moins une caractéristique d'un appareil de cuisson est un identifiant de profil de cuisson.

13. Procédé selon la revendication 12, dans lequel l'identifiant de profil de cuisson indique un besoin de sortie de puissance du circuit d'excitation.

14. Décodeur magnétique pour une plaque de cuisson,
ledit décodeur magnétique pouvant décoder un code magnétique d'un appareil de cuisson, ledit code magnétique comprenant une pluralité d'aimants, chaque dit aimant ayant un pôle nord et un pôle sud, ledit code magnétique déterminé par l'orientation desdits pôles de ladite pluralité d'aimants ;
le décodeur magnétique comprenant une pluralité de capteurs de champ magnétique,
dans lequel, en fonctionnement, lorsqu'un dit appareil de cuisson est situé sur ladite plaque de cuisson, un code magnétique dudit appareil de cuisson est situé au dessus du décodeur magnétique et le décodeur magnétique fournit un dit code indiquant une caractéristique d'au moins un appareil de cuisson associé au code magnétique.
